# EUROPEAN PATENT APPLICATION

(11) **EP 3 693 251 A1**
(43) Date of publication of application: **12.08.2020**
(21) Application number: 18855930.6
(22) Date of filing: 13.09.2018
(51) Int. Cl.: B62D 21/00, B62D 21/14

(54) **AUTOMOBILE BODY FRAME SUITABLE FOR PRODUCTS FROM COMMON PLATFORM AND AUTOMOBILE WITH AUTOMOBILE BODY FRAME**

(30) Priority: 15.09.2017 CN 201710834284; 15.09.2017 CN 201721185439 U
(71) Applicant: Aiways Automobile Co., Ltd, Jiangxi 334000 (CN)
(72) Inventor: GU, Feng, Shanghai 200090 (CN)
(74) Representative: RGTH
(86) International application number: PCT/CN2018/105397
(87) International publication number: WO 2019/052493

(57) **Abstract**

Provided is an automobile body frame (1) suitable for products from a common platform, the automobile body frame comprising: a first adjusting bracket assembly (11) arranged at an automobile head end of the automobile body frame (1) and configured to support and fix a front secondary automobile frame of the automobile body frame (1); a second adjusting bracket assembly (14) arranged at an automobile body end of the automobile body frame (1) and configured to support and fix a rear secondary automobile frame of the automobile body frame (1); and a seat mechanical mounting assembly (12) arranged at a middle of the automobile body frame (1) and configured to support and fix a seat skeleton of the automobile body frame (1). For different automobile models, the first adjusting bracket assembly, the second adjusting bracket assembly and the seat mechanical mounting assembly are respectively adjusted in a mounting direction to the mounting heights matching the front secondary automobile frame, the rear secondary automobile frame and the seat skeleton for different automobile models. Further provided is an automobile comprising the automobile body frame.

## Description

### CROSS-REFERENCE FOR RELATED APPLICATIONS

The present application claims the priorities of the Chinese Patent application with the application number of 201710834284.8 and the title of "automobile body frame suitable for products from common platform and automobile with automobile body frame" filed before the China Patent Office on September 15, 2017 and the Chinese Patent application with the application number of 201721185439.1 and the title of "automobile body frame suitable for products from common platform and automobile with automobile body frame" filed before the China Patent Office on September 15, 2017, the entire contents of which are incorporated by reference in the present application.

### TECHNICAL FIELD

The present disclosure belongs to technical field of automobile body development and relates to an automobile body frame, particularly to an automobile body frame suitable for products from a common platform and an automobile having the automobile body frame.

### BACKGROUND

A Battery Electric Automobile (BEV) refers to an automobile, which is powered by an on-board power supply, uses motors to drive wheels to move, and complies with respective requirements of the road traffic and safety regulations.

At present, domestic manufacturers often use the means of benchmark to respectively reverse and separately verify cars, SUVs and MPVs, which increases the development cost of products from the common platform (cars, SUVs and MPVs), extends the development cycle of architectural components of the platform, and makes it impossible to achieve universalization for the platform of multiple automobile models.

Therefore, how to provide an automobile body frame suitable for products from a common platform and an automobile having the automobile body frame, to solve the defects that the automobile platform in the prior art increases the development cost of products from the common platform, extends the development cycle of architectural components of the platform, and makes it impossible to achieve universalization for the platform of multiple automobile models, has become a technical problem to be solved by those skilled in the art.

### SUMMARY

In view of the above-mentioned shortcomings of the prior art, the purpose of the present disclosure is to provide an automobile body frame suitable for products from a common platform and an automobile having the automobile body frame, to solve the problems that the automobile platform in the prior art increases the development cost of products from the common platform, extends the development cycle of architectural components of the platform, and makes it impossible to achieve universalization for the platform of multiple automobile models.

In order to achieve the above and other related purposes, an aspect of the present disclosure provides an automobile body frame suitable for products from a common platform, which comprises: a first adjusting bracket assembly arranged at an automobile head end of the automobile body frame and configured to support and fix a front secondary automobile frame of the automobile body frame; a second adjusting bracket assembly arranged at an automobile body end of the automobile body frame and configured to support and fix a rear secondary automobile frame of the automobile body frame; a seat mechanical mounting assembly arranged at a middle of the automobile body frame and configured to support and fix a seat skeleton of the automobile body frame; wherein for different automobile models, the first adjusting bracket assembly, the second adjusting bracket assembly and the seat mechanical mounting assembly are respectively adjusted in a mounting direction to the mounting heights matching the front secondary automobile frames, the rear secondary automobile frames and the seat skeletons for different automobile models.

In an embodiment of the present disclosure, the automobile body frame further comprises a middle floor assembly arranged at a middle floor of the automobile body frame; the middle floor assembly configured to adjust transverse lengths matching the middle floors for different automobile models in a transverse direction, to adjust the wheelbase of the automobile body frame.

In an embodiment of the present disclosure, the first adjusting bracket assembly comprises: a first mount of the front secondary automobile frame, a second mount of the front secondary automobile frame, a third mount of the front secondary automobile frame and a fourth mount of the front secondary automobile frame; the first mount of the front secondary automobile frame and the second mount of the front secondary automobile frame are arranged on a first base, the third mount of the front secondary automobile frame and the fourth mount of the front secondary automobile frame are arranged on a second base, and the first base and the second base are respectively located at two sides of the front secondary automobile frame; wherein the first mount of the front secondary automobile frame and the second mount of the front secondary automobile frame, and the third mount of the front secondary automobile frame and the fourth mount of the front secondary automobile frame are respectively located at the two sides of the front secondary automobile frame; the first mount of the front secondary automobile frame and the second mount of the front secondary automobile frame are respectively located at one end and the other end at the same side of the front secondary automobile frame, to support and fix one side of the front secondary automobile frame; the third mount of the front secondary automobile frame and the fourth mount of the front secondary automobile frame are respectively located at one end and the other end at the same other side of the front secondary automobile frame, to support and fix the other side of the front secondary automobile frame; wherein the first mount of the front secondary automobile frame, the second mount of the front secondary automobile frame, the third mount of the front secondary automobile frame and the fourth mount of the front secondary automobile frame are respectively adjusted to the mounting heights matching the front secondary automobile frames for different automobile models and configured to fix the front secondary automobile frame through a fixing member.

In an embodiment of the present disclosure, the first base and the second base are suspended and connected on the automobile body frame through a connecting beam therebetween.

In an embodiment of the present disclosure, the first adjusting bracket assembly further comprises elastic struts, which are respectively located at the two sides of the front secondary automobile frame, fixing ends of the elastic struts are configured to support steering knuckles of the automobile body frame, elastic ends of the elastic struts are supported at the front secondary automobile frame to support the bounce of automobile body tires; the steering knuckles are respectively fixed on the first base and the second base.

In an embodiment of the present disclosure, a swing arm, whose one end is pivotally connected with the steering knuckle, is further provided on the elastic strut, to bear the steering torque and transmit the steering force to the steering knuckle.

In an embodiment of the present disclosure, the second adjusting bracket assembly comprises a first mount of the rear secondary automobile frame, a second mount of the rear secondary automobile frame, a third mount of the rear secondary automobile frame and a fourth mount of the rear secondary automobile frame; wherein the first mount of the rear secondary automobile frame and the second mount of the rear secondary automobile frame, and the third mount of the rear secondary automobile frame and the fourth mount of the rear secondary automobile frame are respectively located at the two sides of the rear secondary automobile frame and fixed on a side beam of the automobile body end; the first mount of the rear secondary automobile frame and the second mount of the rear secondary automobile frame are respectively located at one end and the other end at the same side of the rear secondary automobile frame, to support and fix one side of the rear secondary automobile frame; the third mount of the rear secondary automobile frame and the fourth mount of the rear secondary automobile frame are respectively located at one end and the other end at the same other side of the rear secondary automobile frame, to support and fix the other side of the rear secondary automobile frame; wherein the first mount of the rear secondary automobile frame, the second mount of the rear secondary automobile frame, the third mount of the rear secondary automobile frame and the fourth mount of the rear secondary automobile frame are respectively adjusted in the mounting direction to the mounting heights matching the rear secondary automobile frames for different automobile models and configured to fix the rear secondary automobile frame through a fixing member.

In an embodiment of the present disclosure, the second adjusting bracket assembly further comprises a first longitudinal arm bracket and a second longitudinal arm bracket, which are respectively located at two sides of the rear secondary automobile frame and are respectively configured to support chassis longitudinal arms located at the two sides of the automobile body end.

In an embodiment of the present disclosure, the seat mechanical mounting assembly comprises: a driver seat skeleton mount, which is configured to support the driver seat and adjusted in the mounting direction to the mounting heights matching the driver seat skeletons for different automobile models; a co-pilot seat skeleton mount, which is configured to support the co-pilot seat skeleton and adjusted in the mounting direction to the mounting heights matching the co-pilot seat skeletons for different automobile models.

Another aspect of the present disclosure provides an automobile, which comprises the described automobile body frame suitable for products from the common platform.

As described above, the automobile body frame suitable for products from the common platform and the automobile having the automobile body frame of the present disclosure have the following beneficial effects:
The automobile body frame provided by present disclosure is applicable to series models from the MAS platform, covering models such as SUVs, cars and MPVs, which reduces the development cost of products from the common platform, shortens the development period of architectural components of the platform, achieves the universalization of platforms for a variety of automobile models, and enables a more expandable automobile platform with a higher degree of weight reduction.

### BRIEF DESCRIPTION OF THE DRAWINGS

Figure 1 shows a perspective structure schematic diagram of the automobile body frame suitable for products from the common platform of the present disclosure.
Figure 2 shows a perspective structure schematic diagram of the first adjusting bracket assembly of the present disclosure.
Figure 3 shows a schematic top view of the seat mechanical mounting assembly and the middle floor assembly of the present disclosure.
Figure 4 shows a perspective structure schematic diagram of the second adjusting bracket assembly of the present disclosure.

### DESCRIPTION OF REFERENCE NUMERALS

- 1: Automobile body frame suitable for products from a common platform
- 11: First adjusting bracket assembly
- 12: Seat mechanical mounting assembly
- 13: Middle floor assembly
- 14: Second adjusting bracket assembly
- 15: Steering knuckle
- 16: Swing arm
- 17: Side beam
- 111: First mount of front secondary automobile frame
- 112: Second mount of front secondary automobile frame
- 113: Third mount of front secondary automobile frame
- 114: Fourth mount of front secondary automobile frame
- 115: Elastic strut
- 116: First base
- 117: Second base
- 121: Driver seat skeleton mount
- 122: Co-pilot seat skeleton mount
- 141: First mount of rear secondary automobile frame
- 142: Second mount of rear secondary automobile frame
- 143: Third mount of rear secondary automobile frame
- 144: Fourth mount of rear secondary automobile frame
- 145: First longitudinal arm bracket
- 146: Second longitudinal arm bracket

### DETAILED DESCRIPTION

In the following, the implementation of the present disclosure will be described by specific concrete embodiments, and those skilled in the art can easily understand other advantages and effects of the present disclosure from the contents disclosed in the present description.

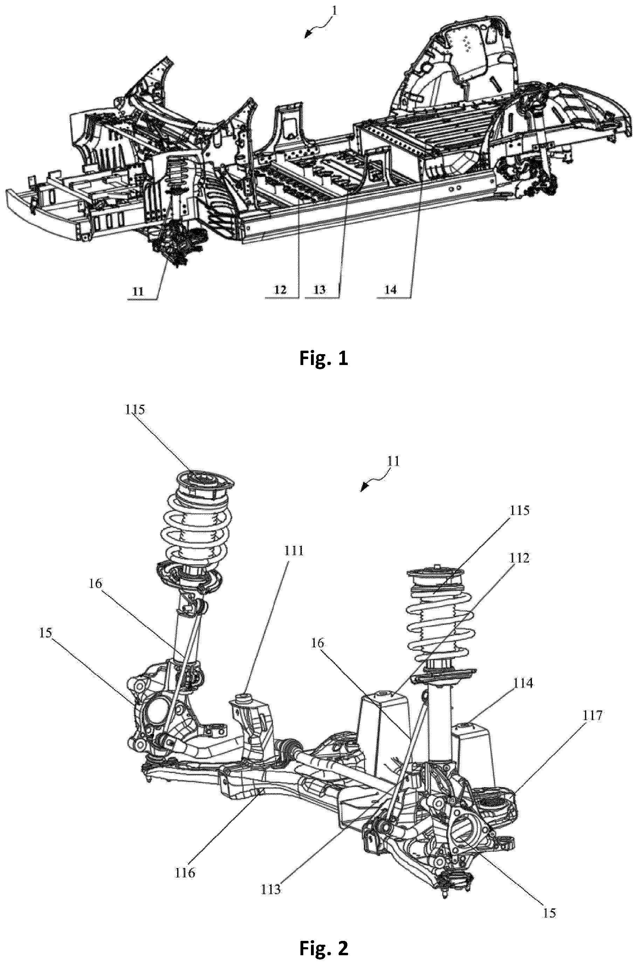

Please refer to Figure 1 to Figure 4. It should be noted that the structure, proportion, size, etc. shown in the drawings of the present description are only used to match the contents disclosed in the description, for those skilled in the art to understand and read, not used to limit defining conditions on which the present disclosure can be implemented, and thus do not have a technically significant meaning. Any modification of the structure, change in the proportional relationship or adjustment of the size, without affecting the effectiveness, which can be generated by the present disclosure, and the purpose, which can be achieved by the present disclosure, all should still fall into the scopes, which can be covered by the technical contents disclosed by the present disclosure. In the meantime, the terms such as "upper", "lower", "left", "right", "middle", "a" and "one" cited in the present description are also only used to facilitate the understanding of the description and not used to define the scopes, which can be implemented by the present disclosure, and the change or adjustment of the relative relationship of which, without substantial changes in the technical contents, should also be regarded as the scopes, which can be implemented by the present disclosure.

### EMBODIMENT

The present embodiment provides an automobile body frame suitable for products from a common platform, which comprises:
a first adjusting bracket assembly arranged at an automobile head of the automobile body frame and configured to support and fix a front secondary automobile frame of the automobile body frame;
a second adjusting bracket assembly arranged at an automobile body of the automobile body frame and configured to support and fix a rear secondary automobile frame of the automobile body frame;
a seat mechanical mounting assembly arranged at a middle of the automobile body frame and configured to support and fix a seat skeleton of the automobile body frame;
wherein for different automobile models, the first adjusting bracket assembly, the second adjusting bracket assembly and the seat mechanical mounting assembly are respectively adjusted in a mounting direction to the mounting heights matching the front secondary automobile frames, the rear secondary automobile frames and the seat skeletons for different automobile models.

The automobile body frame suitable for products from the common platform provided by the present embodiment will be described in detail below in connection with the drawings. Please refer to Figure 1, which shows a perspective structure schematic diagram of the automobile body frame suitable for products from the common platform. As shown in Figure 1, the automobile body frame 1 suitable for products from the common platform includes a first adjusting bracket assembly 11, a seat mechanical mounting assembly 12, a middle floor assembly 13 and a second adjusting bracket assembly 14.

The first adjusting bracket assembly 11 is arranged at an automobile head of the automobile body frame 1 and used for supporting and fixing a front secondary automobile frame of the automobile body frame 1. For different automobile models, without changing the front secondary automobile frame, the first adjusting bracket assembly 11 is adjusted in the longitudinal direction (the Z direction in the present embodiment) to the mounting heights matching the front secondary automobile frames for different automobile models, so that a Z direction adjustment of the heights for automobile models is achieved. In the present embodiment, through the first adjusting bracket assembly 11, an adjustable range of -40 mm ∼ 0 mm in the Z direction of the front secondary automobile frame can be achieved.

Please refer to Figure 2, which shows a perspective structure schematic diagram of the first adjusting bracket assembly 11. As shown in Figure 2, the first adjusting bracket assembly 11 comprises: a first mount 111 of the front secondary automobile frame (in the present embodiments, the first mount 111 of the front secondary automobile frame is also referred as the right front mount of the front secondary automobile frame), a second mount 112 of the front secondary automobile frame (in the present embodiments, the second mount 112 of the front secondary automobile frame is also referred as the right rear mount of the front secondary automobile frame), a third mount 113 of the front secondary automobile frame (in the present embodiments, the third mount 113 of the front secondary automobile frame is also referred as the left front mount of the front secondary automobile frame) and a fourth mount 114 of the front secondary automobile frame (in the present embodiments, the fourth mount 114 of the front secondary automobile frame is also referred as the left rear mount of the front secondary automobile frame) and elastic struts 115. The first mount 111 of the front secondary automobile frame and the second mount 112 of the front secondary automobile frame are arranged on a first base 116, the third mount 113 of the front secondary automobile frame and the fourth mount 114 of the front secondary automobile frame are arranged on a second base 117, and the first base 116 and the second base 117 are respectively located at two sides of the front secondary automobile frame. The first base 116 and the second base 117 are suspended and connected on the automobile body frame 1 through a connecting beam therebetween.

The first mount 111 of the front secondary automobile frame and the second mount 112 of the front secondary automobile frame are respectively located at the automobile head and the automobile body at the right side of the front secondary automobile frame and used for supporting and fixing the right side of the front secondary automobile frame.

The third mount 113 of the front secondary automobile frame and the fourth mount 114 of the front secondary automobile frame are respectively located at the automobile head and the automobile body at the left side of the front secondary automobile frame and used for supporting and fixing the left side of the front secondary automobile frame.

Wherein the first mount of the front secondary automobile frame, the second mount of the front secondary automobile frame, the third mount of the front secondary automobile frame and the fourth mount of the front secondary automobile frame are respectively adjusted to the mounting heights matching the front secondary automobile frames for different automobile models and used for fixing the front secondary automobile frame through a fixing member.

The elastic struts 115 are respectively located at the two sides of the front secondary automobile frame. Continue to refer to Figure 2, the fixing ends of the elastic struts 115 are used for supporting steering knuckles 15 of the automobile body frame 1, and elastic ends of the elastic struts 115 are supported at the front secondary automobile frame to support the bounce of tires of the automobile body. The steering knuckles 15 are respectively fixed on the first base 116 and the second base 117. A swing arm 16, which is pivotally connected with the steering knuckle 15, is further provided at one end of the elastic strut 115, to bear the steering torque and transmit the steering force to the steering knuckle 15.

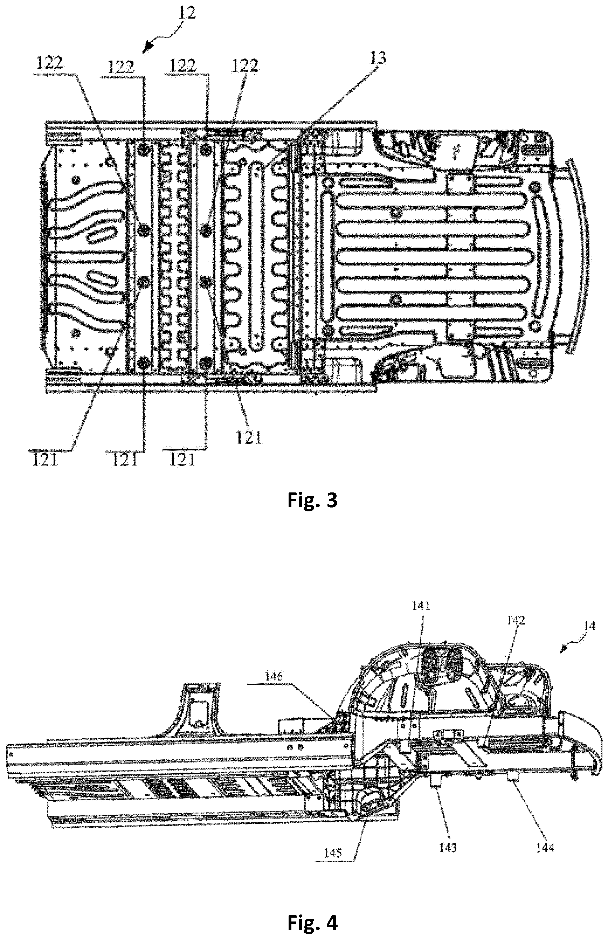

After the front secondary automobile frame is mounted, next the seat mechanical mounting assembly 12, which is arranged at the middle of the automobile body frame 1 and used for supporting and fixing a seat skeleton of the automobile body frame 1, will be introduced below. Please refer to Figure 3, which shows a schematic top view of the seat mechanical mounting assembly and the middle floor assembly. As shown in Figure 3, the seat mechanical mounting assembly 12 includes driver seat skeleton mounts 121 and co-pilot seat skeleton mounts 122.

In the present embodiment, there are 4 driver seat skeleton mounts 121, which are respectively located under the end corners of the driver seat skeleton, are used for supporting the driver seat, and adjusted in the mounting direction (Z direction) to the mounting heights matching the driver seat skeletons for different automobile models. In the present embodiment, through the driver seat skeleton mounts 121, an adjustable range of -70 mm ∼ 0 mm in the Z direction of the driver seat skeleton can be achieved.

In the present embodiment, there are 4 co-pilot seat skeleton mounts 122, which are respectively located under the end corners of the co-pilot seat skeleton, are used for supporting the co-pilot seat skeleton, and adjusted in the mounting direction (Z direction) to the mounting heights matching the co-pilot seat skeletons for different automobile models. In the present embodiment, through the co-pilot seat skeleton mounts 122, an adjustable range of -70 mm ∼ 0 mm in the Z direction of the co-pilot seat skeleton from the common platform can be achieved.

After the seats are mounted, next the middle floor assembly 13 (refer to Figure 3), which is used for adjusting transverse (X direction) lengths matching the middle floors for different automobile models in a transverse direction, will be mounted in the middle of the automobile body frame 1, to adjust the wheelbase of the automobile body frame. In the present embodiment, through the middle floor assembly 13, an adjustable range of -100 mm ∼ +100 mm in the X direction of the wheelbases from the common platform can be achieved.

At last, in order not to change the rear secondary automobile frames for different automobile models, the second adjusting bracket assembly 14 will be arranged at the automobile body of the automobile body frame to achieve the adjustment of the heights of the rear secondary automobile frames for different automobile models in the mounting direction. Please refer to Figure 4, which shows a perspective structure schematic diagram of the second adjusting bracket assembly. As shown in Figure 4, the second adjusting bracket assembly 14 includes a first mount 141 of the rear secondary automobile frame, a second mount 142 of the rear secondary automobile frame, a third mount 143 of the rear secondary automobile frame, a fourth mount 144 of the rear secondary automobile frame, a first longitudinal arm bracket 145 and a second longitudinal arm bracket 146.

The first mount 141 of the rear secondary automobile frame and the second mount 142 of the rear secondary automobile frame, and the third mount 143 of the rear secondary automobile frame and the fourth mount 144 of the rear secondary automobile frame are respectively located at the two sides of the rear secondary automobile frame and fixed on a side beam 17 of the automobile body of the automobile body frame 1.

Continue to refer to Figure 4, the first mount 141 of the rear secondary automobile frame and the second mount 142 of the rear secondary automobile frame are respectively located at one end and the other end at the same side (the left side) of the rear secondary automobile frame, to support and fix one side (the left side) of the rear secondary automobile frame; the third mount 143 of the rear secondary automobile frame and the fourth mount 144 of the rear secondary automobile frame are respectively located at one end and the other end at the same other side (the right side) of the rear secondary automobile frame, to support and fix the other side of the rear secondary automobile frame; wherein the first mount 141 of the rear secondary automobile frame, the second mount 142 of the rear secondary automobile frame, the third mount 143 of the rear secondary automobile frame and the fourth mount 144 of the rear secondary automobile frame are respectively adjusted in the mounting direction (the Z direction) to the mounting heights (the heights in the Z direction) matching the rear secondary automobile frames for different automobile models and used for fixing the rear secondary automobile frame through a fixing member. In the present embodiment, through the second adjusting bracket assembly 14, an adjustable range of -40 mm ∼ 0 mm for automobile models from the common platform in the Z direction can be achieved.

The first longitudinal arm bracket 145 and the second longitudinal arm bracket 146, which are respectively located at two sides of the rear secondary automobile frame, are used for supporting chassis longitudinal arms located at the two sides of the automobile body.

In the present embodiment, the automobile body frame is a sluminum alloy profile frame.

The present embodiment further provides an automobile, which includes the above described automobile body frame suitable for products from the common platform.

To sum up, the automobile body frame provided by present disclosure is applicable to series models from the MAS platform, covering models such as SUVs, cars and MPVs, which reduces the development cost of products from the common platform, shortens the development period of architectural components of the platform, achieves the universalization of platforms for a variety of automobile models, and enables a more expandable automobile platform with a higher degree of weight reduction. Therefore, the present disclosure effectively overcomes various shortcomings in the prior art and has high industrial utilization value.

The above described embodiments are merely illustrative of the principles and effects of the present disclosure, and are not intended to limit the present disclosure. Those skilled in the art can modify or change the above embodiments without departing from the spirit and scope of the present disclosure. Therefore, all equivalent modifications or changes made by those ordinarily skilled in the art without departing from the spirit and technical ideas disclosed by the present disclosure should still be covered by the claims of the present disclosure.

## Claims

1. An automobile body frame suitable for products from a common platform, comprising:
a first adjusting bracket assembly arranged at an automobile head of the automobile body frame and configured to support and fix a front secondary automobile frame of the automobile body frame;
a second adjusting bracket assembly arranged at an automobile body of the automobile body frame and configured to support and fix a rear secondary automobile frame of the automobile body frame;
a seat mechanical mounting assembly arranged at a middle of the automobile body frame and configured to support and fix a seat skeleton of the automobile body frame;
wherein for different automobile models, the first adjusting bracket assembly, the second adjusting bracket assembly and the seat mechanical mounting assembly are respectively adjusted in a mounting direction to the mounting heights matching the front secondary automobile frames, the rear secondary automobile frames and the seat skeletons for different automobile models.

2. The automobile body frame suitable for products from the common platform according to claim 1, wherein the automobile body frame further comprises a middle floor assembly arranged at a middle floor of the automobile body frame; the middle floor assembly is configured to adjust transverse lengths matching the middle floors for different automobile models in a transverse direction, to adjust the wheelbase of the automobile body frame.

3. The automobile body frame suitable for products from the common platform according to claim 1, wherein the first adjusting bracket assembly comprises: a first mount of the front secondary automobile frame, a second mount of the front secondary automobile frame, a third mount of the front secondary automobile frame and a fourth mount of the front secondary automobile frame; the first mount of the front secondary automobile frame and the second mount of the front secondary automobile frame are arranged on a first base, the third mount of the front secondary automobile frame and the fourth mount of the front secondary automobile frame are arranged on a second base, and the first base and the second base are respectively located at two sides of the front secondary automobile frame;
wherein the first mount of the front secondary automobile frame and the second mount of the front secondary automobile frame, and the third mount of the front secondary automobile frame and the fourth mount of the front secondary automobile frame are respectively located at the two sides of the front secondary automobile frame;
the first mount of the front secondary automobile frame and the second mount of the front secondary automobile frame are respectively located at one end and the other end at the same side of the front secondary automobile frame, to support and fix one side of the front secondary automobile frame;
the third mount of the front secondary automobile frame and the fourth mount of the front secondary automobile frame are respectively located at one end and the other end at the same other side of the front secondary automobile frame, to support and fix the other side of the front secondary automobile frame;
wherein the first mount of the front secondary automobile frame, the second mount of the front secondary automobile frame, the third mount of the front secondary automobile frame and the fourth mount of the front secondary automobile frame are respectively adjusted to the mounting heights matching the front secondary automobile frames for different automobile models and configured to fix the front secondary automobile frame through a fixing member.

4. The automobile body frame suitable for products from the common platform according to claim 3, wherein the first base and the second base are suspended and connected on the automobile body frame through a connecting beam therebetween.

5. The automobile body frame suitable for products from the common platform according to claim 3, wherein the first adjusting bracket assembly further comprises elastic struts respectively located at the two sides of the front secondary automobile frame, fixing ends of the elastic struts are configured to support steering knuckles of the automobile body frame, elastic ends of the elastic struts are supported at the front secondary automobile frame to support the bounce of tires of the automobile body; the steering knuckles are respectively fixed on the first base and the second base.

6. The automobile body frame suitable for products from the common platform according to claim 5, wherein a swing arm, whose one end is pivotally connected with the steering knuckle, is further provided on the elastic strut, to bear the steering torque and transmit the steering force to the steering knuckle.

7. The automobile body frame suitable for products from the common platform according to claim 1, wherein the second adjusting bracket assembly comprises a first mount of the rear secondary automobile frame, a second mount of the rear secondary automobile frame, a third mount of the rear secondary automobile frame and a fourth mount of the rear secondary automobile frame;
wherein the first mount of the rear secondary automobile frame and the second mount of the rear secondary automobile frame, and the third mount of the rear secondary automobile frame and the fourth mount of the rear secondary automobile frame are respectively located at the two sides of the rear secondary automobile frame and fixed on a side beam of the automobile body;
the first mount of the rear secondary automobile frame and the second mount of the rear secondary automobile frame are respectively located at one end and the other end at the same side of the rear secondary automobile frame, to support and fix one side of the rear secondary automobile frame;
the third mount of the rear secondary automobile frame and the fourth mount of the rear secondary automobile frame are respectively located at one end and the other end at the same other side of the rear secondary automobile frame, to support and fix the other side of the rear secondary automobile frame;
wherein the first mount of the rear secondary automobile frame, the second mount of the rear secondary automobile frame, the third mount of the rear secondary automobile frame and the fourth mount of the rear secondary automobile frame are respectively adjusted in the mounting direction to the mounting heights matching the rear secondary automobile frames for different automobile models and configured to fix the rear secondary automobile frame through a fixing member.

8. The automobile body frame suitable for products from the common platform according to claim 7, wherein the second adjusting bracket assembly further comprises a first longitudinal arm bracket and a second longitudinal arm bracket which are respectively located at two sides of the rear secondary automobile frame and are respectively configured to support chassis longitudinal arms located at the two sides of the automobile body.

9. The automobile body frame suitable for products from the common platform according to claim 1, wherein the seat mechanical mounting assembly comprises:
driver seat skeleton mounts, which are configured to support the driver seat skeleton and adjusted in the mounting direction to the mounting heights matching the driver seat skeletons for different automobile models;
co-pilot seat skeleton mounts, which are configured to support the co-pilot seat skeleton and adjusted in the mounting direction to the mounting heights matching the co-pilot seat skeletons for different automobile models.

10. An automobile, **characterized by** comprising an automobile body frame suitable for products from the common platform according to any of claims 1-9.
